# EUROPÄISCHE PATENTSCHRIFT

(11) **EP 2 744 692 B1**
(45) Veröffentlichungstag und Bekanntmachung des Hinweises auf die Patenterteilung: **27.05.2015**
(21) Anmeldenummer: 12733715.2
(22) Anmeldetag: 10.07.2012
(51) Int. Cl.: B60T 7/10, B60T 11/18, B60T 13/74, G05G 1/30, G05G 1/40, G05G 1/46

(54) **ELEKTROMECHANISCHER BREMSKRAFTVERSTÄRKER**
ELECTROMECHANICAL BRAKE SERVO
MECHANISME DE FREINAGE ELECTROMECHANIQUE

(30) Priorität: 16.08.2011 DE 102011081001
(43) Veröffentlichungstag der Anmeldung: 25.06.2014
(73) Patentinhaber: Bayerische Motoren Werke Aktiengesellschaft, 80809 München (DE)
(72) Erfinder: SCHMIDT, Roland, 82131 Stockdorf (DE)
(86) Internationale Anmeldenummer: PCT/EP2012/063506
(87) Internationale Veröffentlichungsnummer: WO 2013/023843

(56) Entgegenhaltungen:
- WO-A1-2012/016639
- DE-A1- 19 723 394
- DE-A1-102005 036 922
- DE-A1-102007 018 469
- DE-A1-102008 057 576
- DE-A1-102009 031 918
- JP-A- 59 029 550
- JP-A- 59 106 357

## Beschreibung

Die Erfindung betrifft einen elektromechanischen Bremskraftverstärker einer Fahrzeug-Bremsanlage mit einem Hauptbremszylinder mit einer mittels eines Bremspedals verlagerbaren und dabei einen Bremsdruck aufbauenden oder abbauenden Kolbenstange, die auch mittels eines Elektromotors verlagerbar ist und wobei dieser einzige Elektromotor in Abhängigkeit vom Pedalweg oder Verschwenkwinkel des um eine Drehachse verschwenkbar aufgehängten Bremspedals solchermaßen angesteuert wird, dass die vom Fahrer des Fahrzeugs für den Aufbau von Bremsdruck auf das Bremspedal aufzubringende Arbeit geringer ist als die ohne Unterstützung durch den Elektromotor zur entsprechenden Verlagerung der Kolbenstange benötigte Arbeit. Zum Stand der Technik wird neben der DE 10 2008 057 576 A1, die Grundlagen anhand eines elektrohydraulischen Bremskraftverstärkers beschreibt, und neben der DE 10 2005 036 922 A1, in der ein Bremspedal-Mechanismus mit veränderbarem Übersetzungsverhältnis gezeigt ist, insbesondere auf die DE 10 2009 031 918 A1 verwiesen. Diese letztgenannte Schrift zeigt ein Beispiel für das übliche Prinzip von elektromechanischen Bremskraftverstärkern, wonach der üblicherweise einzige und eine Unterstützungs-Kraft aufbringende Elektromotor direkt auf die Kolbenstage des Hauptbremszylinders einwirkt.

Bremskraftverstärker in Personenkraftwagen als Kraftfahrzeuge sind auch heute noch zumeist als Unterdruck-Bremskraftverstärker ausgebildet und verwenden für die Erzeugung der Unterstützungs-Kraft Unterdruck, welcher bei früheren Fahrzeug-Antriebsaggregaten in Form quantitätsgesteuerter Brennkraftmaschinen quasi als "Abfallprodukt" zur Verfügung stand. Bei heutigen modernen Fahrzeug-Antriebsaggregaten steht diese Energiequelle jedoch nicht mehr oder nur noch unzureichend zur Verfügung. Man sieht daher eine zusätzliche Unterdruckpumpe vor, um die konventionellen Unterdruck-Bremskraftverstärker weiter verwenden zu können. Dies ist relativ aufwändig; darüber hinaus ist der relativ hohe Bauraumbedarf eines Unterdruck-Bremskraftverstärkers von Nachteil. Alternativ kann ein hydraulischer oder ein elektromechanischer Bremskraftverstärker verwendet werden.

Die Anforderungen, die an solche insbesondere elektro-hydraulischen oder elektromechanischen Bremskraftverstärker gestellt werden, sind sehr hoch. Zum einen müssen diese nämlich höchsten Sicherheitsanforderungen genügen und auch bei Ausfall einer beispielsweise elektrischen Komponente oder dgl. noch ein sicheres Abbremsen des Fahrzeugs durch den Fahrer ermöglichen; zum anderen soll das sog. Pedal-Gefühl, welches der Fahrer des Kraftfahrzeugs beim Betätigen seines Bremspedals empfindet, möglichst vergleichbar dem von Unterdruck-Bremskraftverstärkern gewohnten Pedal-Gefühl mit einer stimmigen Zuordnung zwischen der Pedalkraft und dem Pedalweg sein. Für ein gutes Bremspedalgefühl ist somit zumindest in gewissen Grenzen eine genaue Zuordnung der Pedal-Kraft zum Pedalweg erforderlich. Gute Pedalkraft-Kennlinien sind von Unterdruck-Bremskraftverstärkern her bekannt. Folglich sollte auch eine elektromechanische Unterstützung im Grunde gleichzeitig mit der Pedalbewegung sehr exakt moduliert werden. Dabei hat jedoch ein hoch übersetzter Elektromotor eine große Trägheit, welche die Dynamik begrenzt. Ist beispielsweise die Kraft-Unterstützung geringfügig langsamer als die Pedalbewegung, so wird das Bremspedal "verhärten" d.h. die Unterstützung ist für den Pedalweg zu gering und die Pedalweg-Pedalkraft-Zuordnung liegt dann nicht mehr auf der gewünschten Pedalkraftkennlinie. Gleiches gilt, wenn die Kraft-Unterstützung zu schnell erfolgt. Das Pedal wird in diesem Fall "durchfallen" d.h. die Pedalkraft ist für den Pedalweg zu gering. Wenn man die Dynamik der Betätigung einer Fahrzeug-Bremsanlage analysiert, so erscheint es nur äußerst schwer möglich zu sein, eine einem Unterdruck-Bremskraftverstärker entsprechende hohe Dynamik des unterstützenden Elektromotors zu erreichen, zumal auch der Bremspedalweg sehr exakt gemessen und von einer elektronischen Steuereinheit für diesen Elektromotor verarbeitet werden muss, bevor dieser angesteuert werden kann.

Eine Abhilfemaßnahme für diese geschilderte Problematik aufzuzeigen, ist Aufgabe der vorliegenden Erfindung.

Die Lösung dieser Aufgabe ist für einen elektromechanischen Bremskraftverstärker nach dem Oberbegriff des Anspruchs 1 dadurch gekennzeichnet, dass die Kolbenstange an einem Pedalhebel, der entweder durch das Bremspedal selbst oder durch ein mittels des Bremspedals um eine Drehachse verschwenkbares Zwischenelement gebildet sein kann, abgestützt ist und durch eine Verschwenkbewegung dieses Pedalhebels verlagert wird, wobei die Drehachse des Pedalhebels mittels des (einzigen) Elektromotors im wesentlichen in Bewegungsrichtung der Kolbenstange verlagerbar ist. Vorteilhafte Weiterbildungen sind Inhalt der Unteransprüche.

Vorgeschlagen wird ein sich vom bekannten Stand der Technik, bspw. von der genannten DE 10 2009 031 918 A1, bei dem der Elektromotor direkt auf die Kolbenstange des Hauptbremszylinders einwirkt, grundlegend unterscheidendes Prinzip einer elektromechanischen Bremskraftverstärkung. Mit vorliegender Erfindung ist nämlich ähnlich wie bei der weiterhin genannten DE 10 2005 036 922 A1, die jedoch einen pneumatischen oder einen üblichen elektromechanischen Bremskraftverstärker mit einem diesem vorgelagerten Hebelmechanismus mit elektromotorisch veränderbarem Übersetzungsverhältnis zeigt, die elektromotorische Beeinflussung von der Kolbenstange des Hauptbremszylinders getrennt. Es wurde vorliegend erkannt, dass grundsätzlich keine Bremskraftverstärkung nötig ist, wenn die Pedal-Übersetzung ausreichend groß gewählt wird. In der Praxis führte dies allerdings dazu, dass der benötigte Pedalweg weder vom physiologisch möglichen Fußweg des Fahrers erzeugt noch in einem herkömmlichen Fußraum eines Kraftfahrzeugs, bspw. PKW's untergebracht werden kann. Vorliegend ist daher der einzige Elektromotor dazu vorgesehen, den Pedalweg auf ein übliches Maß zu regeln und dennoch eine hohe Pedalübersetzung vorzusehen. Hierfür stellt der Elektromotor erfindungsgemäß keine Unterstützungskraft im eigentlichen Sinne bereit, sondern quasi Unterstützungs-Arbeit, die bekanntlich physikalisch als mathematisches Produkt von Kraft und Weg definiert ist. Mit erfindungsgemäßem Einsatz des bzw. eines Elektromotors ist also die vom Fahrer zum Aufbau eines bestimmten Bremsdrucks in der hydraulischen Fzg.-Bremsanlage zu erbringende Arbeit geringer als ohne Einsatz dieses Elektromotors. Hierfür verändert der Elektromotor die Pedalübersetzung und verändert damit den Weg, den der Fahrer an seinem Bremspedal darstellen muss, solchermaßen, dass die vom Fahrer für den Aufbau dieses Bremsdrucks zu leistende Arbeit reduziert wird. Die Kraft hingegen, die der Fahrer zum Aufbau dieses Bremsdrucks aufbringen muss, ist mit Einsatz und ohne Einsatz dieses Elektromotors im wesentlichen gleich hoch.

In diesem Sinne kann die bereits genannte Pedalübersetzung, die als Verhältnis des Abstands zwischen der Drehachse des Pedalhebels und dem Krafteinleitungspunkt des Fahrers zum Abstand zwischen der besagten Drehachse und dem Abstützpunkt der Kolbenstange, welcher auf dem Pedalhebel zwischen dessen Drehachse und dem genannten Krafteinleitungspunkt liegt, definiert ist, bevorzugt solchermaßen gewählt sein, dass der Fahrer die Kolbenstange mit bei herkömmlicher wirksamer Bremskraftverstärkung üblichen Kräften auch ohne Aktivierung des Elektromotors geringfügig verlagern kann. Gleichzeitig wird dann der aufgrund einer derartigen Pedalübersetzung ohne Aktivierung des Elektromotors unüblich große Pedalweg durch geeignete elektromotorische Verlagerung der Drehachse des Pedal hebels auf ein übliches Maß reduziert, d.h. solchermaßen geregelt, dass sich ein gewünschter üblicher Pedalweg ergibt.

Näher erläutert wird dies anhand eines ersten, in den beigefügten Figuren 1a, 1b aus unterschiedlichen Blickwinkeln perspektivisch dargestellten und auf das wesentliche beschränkten Ausführungsbeispiels, anhand dessen auch die abhängigen Ansprüche 3, 4 in allgemeiner Form erläutert werden. Die Figuren 2, 3 zeigen als weitere Ausführungsbeispiele Abwandlungen dieses ersten Ausführungsbeispiels.

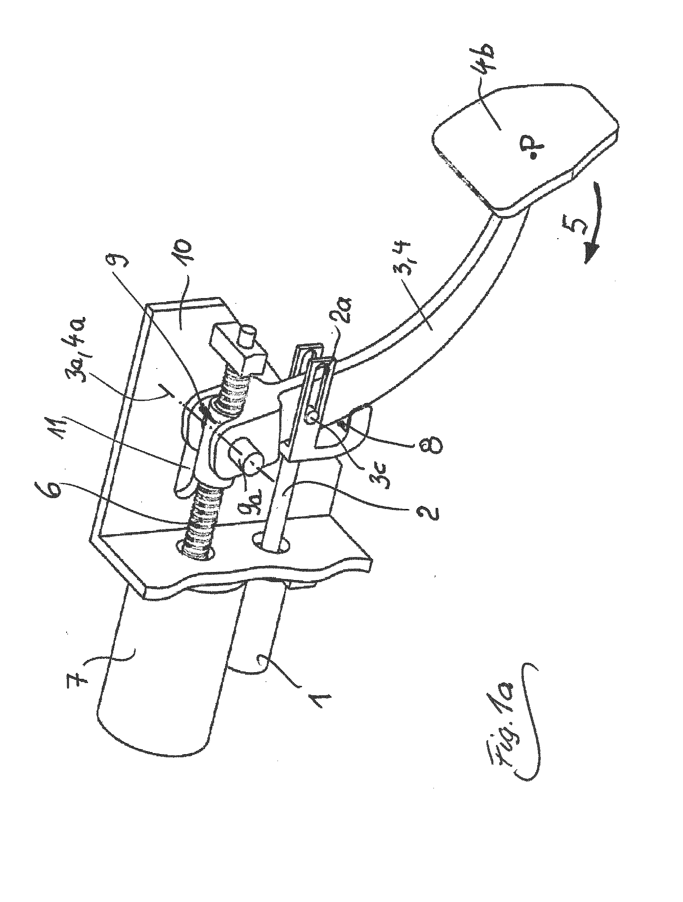

Zunächst auf die Figur 1a Bezug nehmend ist mit der Bezugsziffer 1 ein Hauptbremszylinder einer im Anschluss an diesen wie üblich aufgebauten hydraulischen Fahrzeug-Bremsanlage gekennzeichnet, dessen Kolbenstange die Bezugsziffer 2 trägt. Durch Verlagerung dieser Kolbenstange 2 in den Hauptbremszylinder 1 hinein wird in diesem sowie in der Bremsanlage ein (hydraulischer) Bremsdruck aufgebaut, der mit einer Rückverlagerung der Kolbenstange 2 aus dem Hauptbremszylinder 1 heraus wieder abgebaut wird.

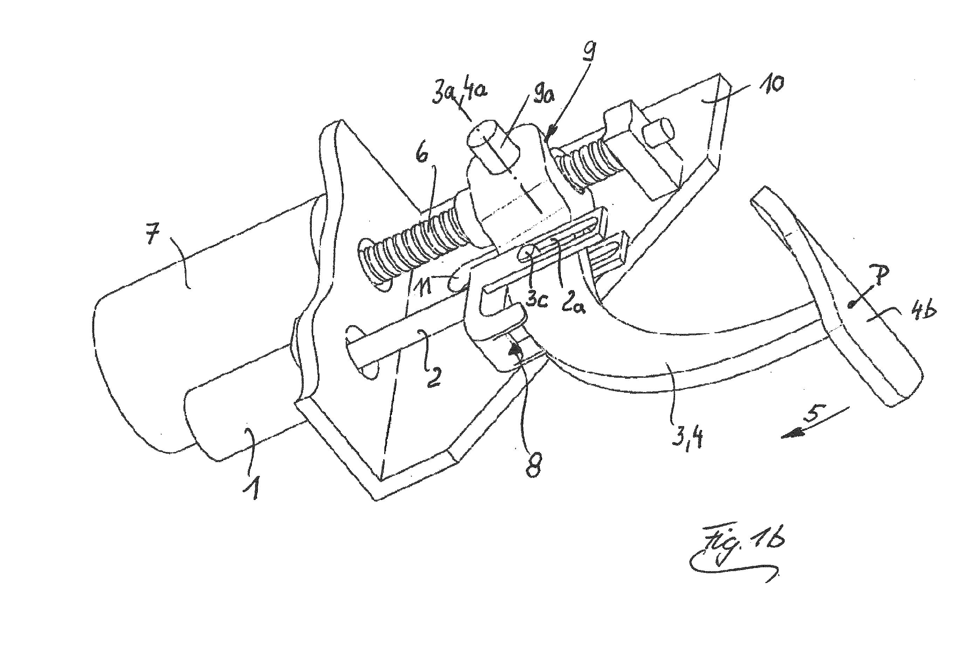

Die Kolbenstange 2 ist mit ihrem freien, d.h. dem Hauptbremszylinder 1 abgewandten bzw. aus diesem herausragenden Endabschnitt an einem sog. Pedalhebel 3 abgestützt, der beim Ausführungsbeispiel nach Figur 1a, 1 b durch ein Bremspedal 4 selbst gebildet wird, d.h. der Pedalhebel 3 ist gleich dem sog. Pedalarm des Bremspedals 4, der die Verbindung zwischen der Pedalplatte 4b des Bremspedals 4 und der Drehachse 4a des Bremspedals 4, an dem dieses wie grundsätzlich üblich verschwenkbar aufgehängt ist, darstellt. Vorliegend ist aufgrund der Gleichheit des Pedalhebels 3 und des Bremspedals 4 somit eine Drehachse 3a des Pedalhebels 3, an dem dieser schwenkbar aufgehängt ist, gleich der Drehachse 4a des Bremspedals 4.

Zur Abstützung der Kolbenstange 2 am Pedalhebel 3 ist an diesem an jeder Seite ein Pedalbolzen 3c vorgesehen, der in eine am freien Endabschnitt der Kolbenstange 2 in einem sog. Gabelkopf der Kolbenstange 2 vorgesehene Führungskulisse 2a eingreift, die vorliegend im wesentlichen in Form eines Langlochs ausgebildet ist und eine Kulissenführung darstellt. Im figürlich dargestellten Zustand liegt jeder Pedalbolzen 3c am dem Hauptbremszylinder 1 zugewandten Ende der sich im wesentlichen in Bewegungsrichtung der Kolbenstange 2 erstreckenden Führungskulisse 2a an. Wird somit ausgehend vom figürlich dargestellten Zustand der Pedalhebel 3 bzw. das Bremspedal 4 durch Druck auf die Pedalplatte 4b gemäß Pfeilrichtung 5 in Richtung zum Hauptbremszylinder 1 hin verschwenkt, so wird hierdurch die Kolbenstange 2 weiter in den Hauptbremszylinder 1 hinein verlagert und es wird folglich Bremsdruck aufgebaut. Es ist die sog. Pedalübersetzung, die als Verhältnis des Abstands zwischen der Drehachse 3a des Pedalhebels 3 und dem Krafteinleitungspunkt P des Fahrers, welcher vorliegend beim ersten Ausführungsbeispiel nach Fig.1a, 1b in bzw. auf der Pedalplatte 4b liegt, zum Abstand zwischen der besagten Drehachse 3a und dem Abstützpunkt der Kolbenstange, welcher auf dem Pedalhebel 3 zwischen dessen Drehachse 3a und dem genannten Krafteinleitungspunkt P liegt und durch den bzw. die Pedalbolzen 3c definiert ist, solchermaßen gewählt, dass der Fahrer die Kolbenstange 2 unter Aufbringung einer bei Fahrzeug-Bremsanlagen betragsmäßig üblichen Kraft verlagern kann. Da sich jedoch mit einer solchen Auslegung der Pedalübersetzung, die sich im wesentlichen aus einer geeigneten Anordnung des Abstützpunktes der Kolbenstage 2 am Pedalhebel 3 und vorliegend durch die Platzierung der Pedalbolzen 3c ergibt, unter Verwendung eines üblichen Hauptbremszylinders 1 ein unverhältnismäßig langer Pedalweg ergeben würde, wenn ein gewünschter üblichen Bremsdruck aufgebaut werden soll, ist gemäß vorliegender Erfindung die Drehachse 3a bzw. 4a, um welchen der Pedalhebel 3 bzw. das Bremspedal 4 verschwenkbar ist bzw. an welchem der Pedalhebel 3 bzw. das Bremspedal 4 aufgehängt ist, im wesentlichen in Verlagerungsrichtung der Kolbenstange 2 verlagerbar.

Für eine solche Verlagerung der Drehachse 3a bzw. 4a ist beim Ausführungsbeispiel nach Figur 1a, 1 b diese Drehachse 3a/4a in Form eines entsprechenden Gelenks 9 auf einer Gewindespindel 6 in Form eines Kugelgewindetriebs gelagert, wobei diese Gewindespindel 6 mittels eines Elektromotors 7 in Rotation versetzt werden kann. Dabei wird dieser Elektromotor 7 von einer figürlich nicht dargestellten Steuereinheit, die den Bremswunsch des Fahrers vorzugsweise anhand der Signale eines Drehwinkel-Sensors, der den Verschwenk-Winkel des Bremspedals 4 in dessen Drehachse 4a misst, solchermaßen angesteuert und in Rotation versetzt, dass der Pedalweg, den der Fahrer zum Aufbau eines gewünschten Bremsdrucks überwinden muss, von üblicher Größe ist. Dieser Pedalweg lässt sich dabei ebenfalls über den Verschwenk-Winkel des Bremspedals 4 in der Drehachse 4a beschreiben, alternativ aber auch über die Wegstrecke, die die Pedalplatte 4b im wesentlichen in horizontaler Richtung, d.h. im wesentlichen in Verlagerungsrichtung der Kolbenstange 2, bei einer Betätigung des Bremspedals durch den Fahrer zurücklegt. Erfindungsgemäß wird vorliegend der einzige Elektromotor 7 also hinsichtlich des Pedalwegs geregelt und nicht - wie im Stand der Technik üblich - hinsichtlich der aufzubringenden Unterstützungskraft.

Selbstverständlich ist das die Drehachse 3a bzw. 4a bildende Gelenk 9, welches auf der Gewindespindel 6 gelagert ist, noch geeignet geführt, damit eine Rotation der Gewindespindel 6 auch tatsächlich eine Längsverlagerung des Gelenks 9 auf der Gewindespindel 6 zur Folge hat. Für diese Führung ist in einer geeignet ausgebildeten, hier aufgebrochen dargestellten Abstützeinheit 10 dieses elektromechanischen Bremskraftverstärkers zu beiden Seiten der Gewindespindel 6 jeweils ein sich in Längsrichtung der Gewindespindel 6 erstreckendes Langloch 11 vorgesehen, in welches ein Führungsbolzen 9a dieses Gelenks 9 hineinragt. An dieser Abstützeinheit 10, die beispielsweise wie vorlieged annähernd U-förmig ausgebildet sein kann, können im übrigen auch der Hauptbremszylinder 1 und der Elektromotor 7 befestigt sein.

Im weiteren wird - nunmehr auch auf Fig.1b verweisend - das Sicherheitskonzept des vorliegenden elektromechanischen Bremskraftverstärker-Konzepts beschrieben. Naturgemäß kann bei einem Ausfall des Elektromotors 7 bzw. des durch diesen Elektromotor 7 und vorliegend den Spindeltrieb mit der Gewindespindel 6 (bzw. allgemein ein Getriebe zur Verlagerung der Drehachse 3a des Pedalhebels 3) gebildeten elektromechanischen Aktuators dieses Bremskraftverstärkers die Drehachse 3a des Pedalhebels 3 nicht verlagert werden, so dass sich für den Aufbau von höherem hydraulischen Bremsdruck ein nicht darstellbarer Pedalweg ergeben könnte. Um dies zu verhindern ist vorliegend im freien Endabschnitt der Kolbenstange 2 neben der bereits erläuterten Abstützung über die Führungskulisse 2a und die Pedalbolzen 3c eine weitere sog. Hilfsabstützung 8 vorgesehen, die in Form eines am freien Ende der Kolbenstange 2 vorgesehenen Anschlags für die dem Hauptbremszylinder 1 zugewandte Seite bzw. Fläche des Pedalarms des Bremspedals 4 bzw. des Pedalhebels 3 ausgebildet ist. Diese Hilfsabstützung 8 liegt dabei näher am Krafteinleitungspunkt P des Bremspedals 4, d.h. beim ersten Ausführungsbeispiel näher an der Pedalplatte 4b als die regulär wirksame Abstützung der Kolbenstange 2 über die Führungskulisse 2a und die Pedalbolzen 3c. Diese Anordnung bewirkt, dass bei Ausfall des elektromechanischen Aktuators bzw. Elektromotors 7 ausgehend von der figürlich dargestellten Position nach einem geringen Pedalweg gemäß Pfeilrichtung 5 die Hilfsabstützung 8 der Kolbenstange 2 am Pedalhebel 3 zum Anliegen kommt und mit weiterem Verschwenken des Bremspedals 4 bzw. Pedalhebels 3 gemäß Pfeilrichtung 5 die Kolbenstange 2 alleine über diese Hilfsabstützung 8 verlagert wird. Hierbei ist die Pedalübersetzung deutlich geringer als bei der regulär wirksamen Abstützung, so dass zwar die vom Fahrer auf die Pedalplatte 4b aufzubringende Pedalkraft spürbar ansteigt, jedoch nimmt gleichzeitig der für einen üblichen Bremsdruck-Aufbau benötigte Pedalweg soweit ab, dass dieser vom Fahrer noch leicht umgesetzt werden kann. Insofern ähnelt das Ausfall-Verhalten des hier beschriebenen elektromechanischen Bremskraftverstärkers demjenigen konventioneller Unterdruck-Bremskraftverstärker. Damit bei einem solchen System-Ausfall die gewünschte Verlagerung der Kolbenstange 2 nicht durch den bzw. die Pedalbolzen 3c verhindert wird, ist die bereits kurz beschriebene Führungskulisse 2a im Gabelkopf der Kolbenstange 2 vorgesehen. In dieser als Langloch ausgebildeten Führungskulisse 2a kann bzw können sich nach Aktivierung der Hilfsabstützung 8 somit der bzw. die Pedalbolzen 3c verschieben, wobei die Kolbenstange 2 das Bremspedal 4 quasi überholt.

Im übrigen muss abweichend von der heute üblichen Auslegung für den Fall eines Systemausfalls in einem der beiden hydraulischen Bremskreise der sich an den Hauptbremszylinder 1 anschließenden Fahrzeug-Bremsanlage nicht derjenige Pedalweg vorgehalten werden, der sich bei einem Ausfall beider Bremskreise der Bremsanlage ergäbe. Vielmehr ist es vorliegend ausreichend, den Pedalweg für den Ausfall eines einzigen Bremskreises vorzuhalten, da der Pedalweg für den zweiten Bremskreis vom elektromechanischen Aktuator bzw. Elektromotor 7 kompensiert werden kann. Der Ausfall beider Bremskreise und des Aktuators muss als Mehrfachfehler nicht berücksichtigt werden.

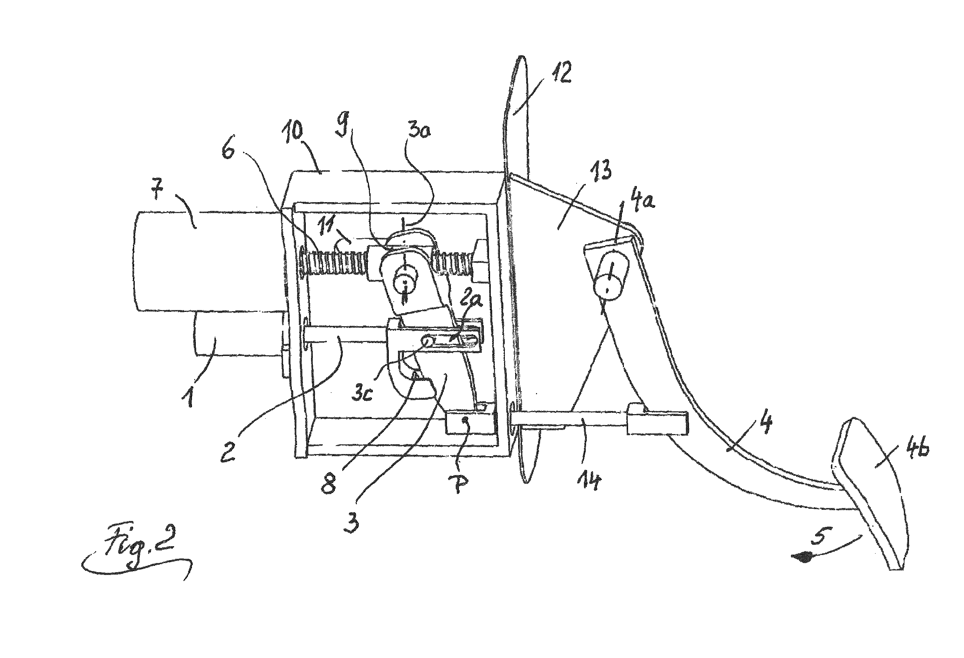

Im weiteren auf Figur 2 Bezug nehmend ist hier eine Abwandlung gezeigt, die quasi ein Bremsgerät 16 als Einheit darstellt, das beispielsweise an der Stirnwand 12 des Fahrzeug-Fußraumes auf der dem Fußraum abgewandten Seite befestigt sein und mit einem wie herkömmlich angeordneten Bremspedal 4 zusammenwirken kann. Dabei sind die gleichen bereits erläuterten Bauelemente wie beim ersten Ausführungsbeispiel mit den gleichen Bezugsziffern gekennzeichnet. Das Gehäuse 10 des Bremsgeräts 16 entspricht also der Abstützeinheit 10 von Fig.1a, 1 b. Wie einfach erkennbar ist, ist beim Ausführungsbeispiel nach Fig.2 der Pedalhebel 3 ein eigenständiges um die Drehachse 3a verschwenkbares Zwischenelement, an dem sich die Kolbenstange 2 abstützt, wobei die Drehachse 3a wie bereits erläutert verlagerbar ist und wobei dieser Pedalhebel 3 mittels des Bemspedals 4 um diese Drehachse 3a verschwenkbar ist. Hierfür ist ein zwischen dem Pedalarm des über einen Lagerbock 13 an der Stirnwand 12 verschwenkbar aufgehängten Bremspedals 4 und dem der Drehachse 3a gegenüber liegenden Ende des Pedalhebels 3 eine Übertragungsstange 14 eingespannt bzw. es verbindet diese Übertragungsstange 14 den Pedalhebel 3 und das Bremspedal 4 gelenkig miteinander, derart, dass der pedalhebel 3 zusammen mit dem Bremspedal 4 verschwenkt wird. Der in Verbindung mit Fig.1 erwähnte Krafteinleitungspunkt P am Pedalhebel 3 entspricht hier also dem Anlenkpunkt dieser Übertragungsstange 14 am Pedalhebel 3.

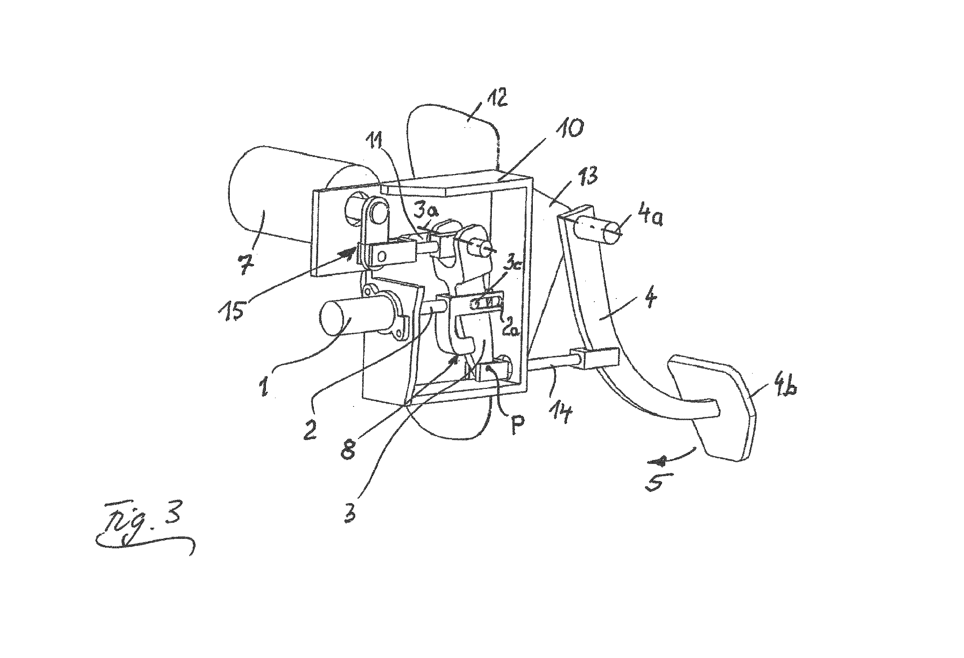

Figur 3 zeigt als weiteres Ausführungsbeispiel eine Abwandlung von Fig.2, wobei zur Verlagerung der Drehachse 3a des Pedalhebels 3 mittels des Elektromotors 7 ein Kurbeltrieb 15 vorgesehen ist. Damit oder mit einem anderen geeigneten Getriebe mit variabler Übersetzung kann bei kleinen Kräften eine hohe Dynamik und bei großen Kräften eine große Übersetzung erreicht werden. Daneben sind selbstverständlich eine Vielzahl weiterer Abwandlungen insbesondere konstruktiver Art möglich, ohne den Inhalt der Patentansprüche zu verlassen.

## Patentansprüche

1. Elektromechanischer Bremskraftverstärker einer Fahrzeug-Bremsanlage mit einem Hauptbremszylinder (1) mit einer mittels eines Bremspedals (4) verlagerbaren und dabei einen Bremsdruck aufbauenden oder abbauenden Kolbenstange (2), die auch mittels eines Elektromotors (7) verlagerbar ist und wobei dieser einzige Elektromotor (7) in Abhängigkeit vom Pedalweg oder Verschwenkwinkel des um eine Drehachse (4a) verschwenkbar aufgehängten Bremspedals (4) solchermaßen angesteuert wird, dass die vom Fahrer des Fahrzeugs für den Aufbau von Bremsdruck auf das Bremspedal (4) aufzubringende Arbeit geringer ist als die ohne Unterstützung durch den Elektromotor zur entsprechenden Verlagerung der Kolbenstange (2) benötigte Arbeit,
**dadurch gekennzeichnet, dass** die Kolbenstange (2) an einem Pedalhebel (3), der entweder durch das Bremspedal (4) selbst oder durch ein mittels des Bremspedals (4) um eine Drehachse (3a) verschwenkbares Zwischenelement gebildet sein kann, abgestützt ist und durch eine Verschwenkbewegung dieses Pedalhebels (3) verlagert wird, wobei die Drehachse (3a) des Pedalhebels (3) mittels des Elektromotors (7) im wesentlichen in Bewegungsrichtung der Kolbenstange (7) verlagerbar ist.

2. Bremskraftverstärker nach Anspruch 1,
**dadurch gekennzeichnet, dass** die Pedalübersetzung, die als Verhältnis des Abstands zwischen der Drehachse (3a) des Pedalhebels (3) und dem Krafteinleitungspunkt (P) des Fahrers zum Abstand zwischen der besagten Drehachse (3a) und dem Abstützpunkt der Kolbenstange, welcher auf dem Pedalhebel (3) zwischen deren Drehachse (3a) und dem genannten Krafteinleitungspunkt (P) liegt, definiert ist, solchermaßen gewählt ist, dass der Fahrer die Kolbenstange (2) mit einer bei wirksamer Bremskraftverstärkung üblichen Kräften auch ohne Aktivierung des Elektromotors (7) geringfügig verlagern kann, und dass der aufgrund einer derartigen Pedalübersetzung ohne Aktivierung des Elektromotors (7) unüblich große Pedalweg durch geeignete elektromotorische Verlagerung der Drehachse (3a) des Pedalhebels (3) auf ein übliches Maß reduziert wird.

3. Bremskraftverstärker nach Anspruch 1 oder 2,
**dadurch gekennzeichnet, dass** am Pedalhebel (3) und/oder an der Kolbenstange (2) eine Hilfsabstützung (8) vorgesehen ist, über die sich bei Ausfall des Elektromotors (7) oder des durch den Elektromotor und ein Getriebe zur Verlagerung der Drehachse (3a) des Pedalhebels (3) gebildeten elektromechanischen Aktuators die Kolbenstange (2) bei entsprechender Verschwenkbewegung des Pedalhebels (3) an diesem zwischen dem genannten Abstützpunkt der Kolbenstange (2) und dem Krafteinleitungspunkt (P) abstützt.

4. Bremskraftverstärker nach einem der vorangegangenen Ansprüche,
**dadurch gekennzeichnet, dass** die Kolbenstange (2) über eine Kulissenführung am Pedalhebel (3) abgestützt ist

5. Bremskraftverstärker nach einem der vorangegangenen Ansprüche,
**dadurch gekennzeichnet, dass** zur Verlagerung der Drehachse (3a) des Pedalhebels (3) mittels des Elektromotors (7) ein insbesondere als Kugelgewindetrieb (6, 9) ausgebildeter Spindeltrieb oder ein Kurbeltrieb (15) oder ein anders Getriebe mit variabler Übersetzung vorgesehen ist.

## Claims

1. An electromechanical brake booster of a vehicle brake system with a main brake cylinder (1) with a piston rod (2), which can be displaced by means of a brake pedal (4) and in the process builds up or reduces a brake pressure, said piston rod also being displaceable by means of an electric motor (7) and wherein this single electric motor (7) is activated depending on the pedal path or pivotability of the brake pedal (4) pivotably suspended about a rotational axis (4a) in such a way that the effort to be made by the driver of the vehicle to build up brake pressure on the brake pedal (4) is less than the effort required without assistance by the electric motor for the corresponding displacement of the piston rod (2), **characterised in that** the piston rod (2) is supported on a pedal lever (3), which can either be formed by the brake pedal (4) itself or by an intermediate element that can be pivoted by means of the brake pedal (4) about a rotational axis (3a), and is displaced by a pivotal movement of this pedal lever (3), the rotational axis (3a) of the pedal lever (3) being displaceable by means of the electric motor (7) substantially in the movement direction of the piston rod (2).

2. A brake booster according to claim 1, **characterised in that** the pedal ratio, which is defined as the ratio of the distance between the rotational axis (3a) of the pedal lever (3) and the force introduction point (P) of the driver to the distance between said rotational axis (3a) and the support point of the piston rod, which lies on the pedal lever (3) between the rotational axis (3a) thereof and said force introduction point (P), is selected in such a way that the driver can slightly displace the piston rod (2) with a force usual with an effective brake boost even without activation of the electric motor (7), and **in that** the unusually large pedal path due to a pedal ratio of this type without activation of the electric motor (7) is reduced by suitable electric motor displacement of the rotational axis (3a) of the pedal lever (3) to a usual amount.

3. A brake booster according to claim 1 or 2, **characterised in that** an auxiliary support (8) is provided on the pedal lever (3) and/or on the piston rod (2), by means of which auxiliary support, upon failure of the electric motor (7) or the electromechanical actuator formed by the electric motor and a gearing to displace the rotational axis (3a) of the pedal lever (3), the piston rod (2), upon a corresponding pivoting movement of the pedal lever (3), is supported thereon between said support point of the piston rod (2) and the force introduction point (P).

4. A brake booster according to any one of the preceding claims, **characterised in that** the piston rod (2) is supported by a guide link on the pedal lever (3).

5. A brake booster according to any one of the preceding claims, **characterised in that** a spindle drive, more especially formed as a ball screw drive (6, 9), or a crank drive (15) or another gearing with a variable gear ratio is provided to displace the rotational axis (3a) of the pedal lever (3) by means of the electric motor (7).

## Revendications

1. Servofrein électromécanique d'une installation de freinage de véhicule comprenant un cylindre principal de frein (1), une tige de piston (2) pouvant être déplacée par une pédale de frein (4) pour établir ou faire chuter ainsi une pression de freinage, et qui peut être également déplacée par un moteur électrique (7), ce moteur électrique unique (7) étant commandé en fonction de la course de la pédale ou de l'angle de pivotement de la pédale de frein (4) qui est suspendue mobile en pivotement autour d'un axe de rotation (4a) de sorte que l'énergie devant être appliquée sur la pédale de frein (4) par le conducteur du véhicule pour établir la pression de freinage soit inférieure à l'énergie nécessaire pour permettre un déplacement correspondant de la tige de piston (2) sans assistance par le moteur électrique,
**caractérisé en ce que**
la tige de piston (2) s'appuie sur un levier de pédale (3) qui peut être formé soit par la pédale de frein (4) elle-même, soit par un élément intermédiaire pouvant être déplacé en pivotement autour d'un axe de rotation (3a) au moyen de la pédale de frein (4), et est déplacée par pivotement de ce levier de pédale (3), l'axe de rotation (3a) du levier de pédale (3) pouvant être déplacé au moyen du moteur électrique (7) essentiellement dans la direction de déplacement de la tige de piston (2).

2. Servofrein conforme à la revendication 1,
**caractérisé en ce que**
le rapport de transmission de la pédale qui est défini comme le rapport de la distance entre l'axe de rotation (3a) du levier de pédale (3) et le point (P) d'application de la force du conducteur et la distance entre cet axe de rotation (3a) et le point d'appui de la tige de piston, qui est situé sur le levier de pédale (3) entre son axe de rotation (3a) et le point d'application de la force (P) est choisi de sorte que le conducteur puisse déplacer faiblement la tige de piston (2) avec l'énergie habituelle, l'assistance du frein est active, également sans activation du moteur électrique (7), et que la course de la pédale inhabituellement grande sans activation du moteur électrique (7) en raison d'un tel rapport de transmission de la pédale soit réduite à une valeur habituelle par un déplacement électromoteur adapté de l'axe de rotation (3a) du levier de pédale (3).

3. Servofrein conforme à la revendication 1 ou 2,
**caractérisé en ce qu'**
il est prévu sur le levier de pédale (3) et/ ou sur la tige de piston (2) un élément d'appui auxiliaire (8) sur lequel en cas de défaillance du moteur électrique (7) ou de l'actionneur électromécanique formé par le moteur électrique et une transmission permettant de déplacer l'axe de rotation (3a) du levier de pédale (3) la tige de piston (2) s'appuie lors d'un déplacement par pivotement correspondant du levier de pédale (3) entre le point d'appui de la tige de piston (2) et le point d'application de la force (P).

4. Servofrein conforme à l'une des revendications précédentes
**caractérisées en ce que**
la tige de piston (2) s'appuie sur le levier de pédale (3) par l'intermédiaire d'un guide de coulisse.

5. Servofrein conforme à l'une des revendications précédentes,
**caractérisé en ce que**
pour permettre de déplacer l'axe de rotation (3a) du levier de pédale (3) au moyen du moteur électrique (7) il est prévu un entraînement par broche en particulier réalisé sous la forme d'une vis à bille (6, 9) ou une transmission à bielle et manivelle (15) ou une autre transmission avec une démultiplication variable.
